# EUROPEAN PATENT SPECIFICATION

(11) **EP 2 389 472 B1**
(45) Date of publication and mention of the grant of the patent: **17.06.2015**
(21) Application number: 09836377.3
(22) Date of filing: 29.12.2009
(51) Int. Cl.: D06F 37/20, D06F 37/22

(54) **LAUNDRY MACHINE**
WASCHMASCHINE
MACHINE DE BLANCHISSERIE

(30) Priority: 30.12.2008 KR 20080136402; 28.05.2009 KR 20090047192; 27.08.2009 KR 20090079950; 28.12.2009 KR 20090131645
(43) Date of publication of application: 30.11.2011
(73) Proprietor: LG Electronics Inc., Yeongdeungpo-gu Seoul 150-721 (KR)
(72) Inventor: SONG, Jung Tae, Gyeongsangnam-Do 641-711 (KR); SEO, Hyun Seok, Gyeongsangnam-Do 641-711 (KR); KIM, Soo Bong, Gyeongsangnam-Do 641-711 (KR); KWON, Ig Geun, Gyeongsangnam-Do 641-711 (KR); KIM, Young Suk, Gyeongsangnam-Do 641-711 (KR); LIM, Hee Tae, Gyeongsangnam-Do 641-711 (KR); JO, Min Gyu, Gyeongsangnam-Do 641-711 (KR)
(74) Representative: Urner, Peter
(86) International application number: PCT/KR2009/007869
(87) International publication number: WO 2010/077056

(56) References cited:
- EP-A1- 1 688 531
- EP-A2- 1 433 890
- EP-A2- 1 605 088
- WO-A2-2008/103007
- WO-A2-2008/103007
- GB-A- 2 279 968
- JP-A- 2009 028 400
- US-A1- 2006 053 838

## Description

### Technical Field

The present invention relates to a laundry machine which treats laundry.

### Background Art

In general, laundry machines include washing machines and drying machines.

Washing machines include pulsator-type washing machines and drum washing machines. These washing machines further include washing/drying machines having both washing and drying functions.

Drying machines are apparatuses which dry wet laundry using hot air.

A drum washing machine includes a tub horizontally disposed, and a drum horizontally disposed within the tub. Laundry is placed in the drum, and is tumbled according to rotation of the drum, thus being washed.

The tub serves to contain wash water, and the drum contains laundry such that washing of laundry is achieved in the drum.

The drum is rotatably installed within the tub.

A rotary shaft is connected to the rear surface of the drum, and receives rotary force transmitted from a motor. Therefore, rotary force generated from rotation of the motor is transmitted to the drum through the rotary shaft, and thus the drum is rotated.

The drum is rotated in a rinse cycle and a spin cycle as well as in a wash cycle, and the drum is vibrated while being rotated.

The rotary shaft passes through the rear wall of the tub, and protrudes to the outside of the tub. Among conventional drum washing machines, a bearing housing may be inserted into the rear wall of the tub by insert molding. Alternatively, the bearing housing may be assembled to the rear wall of the tub.

The rotary shaft is supported by the bearing housing, and vibration of the drum is transmitted to the tub through the shaft and the bearing housing.

Therefore, the tub vibrates together with the drum. In order to damp the vibration, damping and support members are connected to the tub.

That is, the conventional drum washing machine has a structure in which the vibration of the drum is directly transmitted to the tub and the vibration is absorbed by the damping and support members connected to the tub.

WO 2008/103007 A2 relates to a drum type washing machine including a cabinet, a tub provided in the cabinet, a drum rotatably provided in the tub, a bearing housing including a hub having a rotating shaft of the drum passed therethrough and bearings placed in a center portion thereof, a supporting portion which extends from an outside circumference of the hub integrally, and a fastening portion provided integrally with the supporting portion, a connective supporter fastened to the fastening portion for supporting the bearing housing, and a vibration attenuating device between the connective supporter and the cabinet for attenuating vibration.

### Disclosure of Invention

### Technical Problem

The present invention is to provide a laundry machine having a new structure to support a drum.

In one embodiment, a suspension unit may be directly connected to a bearing housing.

### Technical Solution

The object is solved by the features of the independent claim. One embodied laundry machine may include a drum, a drive assembly to rotate the drum, and a suspension unit comprising suspensions to reduce vibration of the drum.

The drive assembly may include a rotary shaft connected to the drum, a bearing housing to rotatably support the rotary shaft, and a motor to rotate the rotary shaft. Here, the motor may be directly connected to the rotary shaft, or be indirectly connected to the rotary shaft.

The bearing housing and suspensions may be spaced away from each other in the radial direction as well as in the axial direction. Therefore, the suspension unit may include radial brackets extended in the radial direction and axial brackets extended in the axial direction. The radial direction and the axial direction may be defined with respect to the rotational axis of the shaft.

The radial and axial brackets may be made integrally or separately.

In the laundry machine, the tub may be fixedly supported, or be supported by a flexible support structure, such as the suspension unit.

Further, the tub may be supported in an interim state between the fixed support and the flexible support.

That is, the tub may be flexibly supported by the suspension unit or be rigidly supported. For example, the tub may be supported by the suspensions, be supported by rubber bushings to provide less flexible movement than when supported by the suspensions, or be fixedly supported by being fixed somewhere by screws or so.

For another instance, the cases where the tub is supported more rigidly than when supported by the suspension unit are as follows.

Firstly, the tub may be made intergrally with the cabinet.

Next, the tub may be supported by being fastened by screws, ribets, rubber bushings, etc. Also, the tub may be welded or bonded to the cabinet. In this cases, the supporting or fastening members have larger stiffnesses than a stiffness of the suspension unit with respect to the main direction of the vibration of the drum.

The tub may be expanded within the limits of a space in which the tub is placed. That is, the tub may be expanded until the circumferential surface thereof reaches(or almost reaches) a side wall or a side frame (for example, a left or right plate of a cabinet) restricting the size of the space at least in the lateral direction (the direction laterally perpendicular to the axial direction of the rotary shaft when the rotary shaft is horizontally placed). The tub may be made intergally with the lateral side walls of the cabinet.

The tub may be formed to be closer in the lateral direction to the wall or the frame than the drum. For example, the tub may be spaced away from the wall or the frame by an interval of less than 1.5 times an interval with the drum. Under the condition that the tub is enlarged in the lateral direction, the drum may also be enlarged in the lateral direction. Further, if the lateral interval between the tub and drum is reduced, the drum may be expanded in the lateral direction in direct proportion. When the lateral interval between the tub and the drum is reduced, the vibration of the drum in the lateral direction may be considered. The weaker the vibration of the drum in the lateral direction, the more expanded is the diameter of the drum. Therefore, the suspension unit to reduce the vibration of the drum may be designed such that rigidity of the suspension unit in the lateral direction is greater than rigidities of the suspension unit in other directions. For example, the suspension unit may be designed such that rigidity of the suspension unit against displacement in the lateral direction is greatest compared with rigidities of the suspension unit against displacements in other directions.

Further, the suspension unit may be directly connected to the bearing housing supporting the rotary shaft. That is, the bearing housing comprises a supporting portion to rotatably support the shaft and an extended portion extended from the supporting portion, and the suspension unit is attached to the supporting portion of the bearing housing or the extended portion of the bearing housing.

The suspension unit may include brackets extended in the axial direction. In a front loading type laundry machine, the brackets may be extended forward, namely towards a door.

The suspension unit may comprises at least two suspensions which are arranged distant from each other in the axial direction of the shaft.

The suspension unit may comprise suspensions placed below the shaft for standing support. The supported object(for example, the drum) is supported by the suspensions to stand alone.

Alternately, the suspension unit may comprise suspensions placed over the shaft for hanging support. In this case, the supported object is supported to be hung.

The mass center of the vibrating object(for example, a combination of the drum, the shaft, the bearing housing, and the motor) may be located, with respect to the center of the longitudinal length of the drum, at a side where the motor is located. In a front loading type laundry machine, the mass center may be located behind the longitudinal center of the drum. In this case, at least one suspension may be placed in front of or behind the mass center. One suspension may be placed in front of the mass center and another suspension behind the mass center.

The tub may be provided with an opening at a rear portion thereof. The drive assembly may be connected to the tub by a flexible member. The flexible member may seal between the tub and the drive assembly to prevent water from leaking through the opening of the rear portion of the tub, and allow the drive assembly to move relatively to the tub. The flexible member may be made of a flexible material which can do the sealing, for example, a gasket material like a front gasket. In this case, the flexible member may be referred to as a rear gasket for convenience. The rear gasket may be connected to the drive assembly under the condition that the rotation of the rear gasket at least in the rotational direction of the rotary shaft is constrained. In one embodiment, the flexible material may be directly connected to the shaft. In another embodiment, the flexible material may be connected to a portion of the bearing housing.

Further, a portion of the drive assembly, which is located radially inside the rear gasket and thus is likely to be exposed to the water in the tub, may be made so as no to be corroded by the water. For example, the portion of the drive assembly may be coated, or be surrounded with a separate member made of plastic such as the tub back(which will be described below). In a case where the portion of the drive assembly is made of metal, the portion may not be directly exposed to water by the coating or the separate plastic member, and thus corrosion of the portion may be prevented.

Further, the cabinet may not be necessary. For example, in a built-in laundry machine, the laundry machine without the cabinet may be installed within a space of a wall structure. However, even in this case, a front plate forming the front face of the laundry machine may be required.

### Advantageous Effects

As described above, the present invention provides a laundry machine having a new structure to support a drum.

A tub has an enlarged size so as to be close to the inner surface of a cabinet, to which the tub is fixed. Thereby, the size of the drum is also enlarged, and consequentially a laundry machine having an increased capacity is obtained.

### Brief Description of Drawings

The accompanying drawings, which are included to provide a further understanding of the invention, illustrate embodiments of the invention and together with the description serve to explain the principle of the invention.

In the drawings:
FIG. 1 is a partially exploded perspective view of a laundry machine in accordance with one embodiment of the present invention;
FIG. 2 is a view illustrating connection among a suspension unit, a bearing housing, and a cabinet base in the laundry machine of FIG. 1;
FIGs. 3 and 4 are views illustrating a structure of the lower portion of the laundry machine in accordance with the embodiment of the present invention;
FIG. 5 is a view illustrating radial brackets of FIG. 2;
FIGs. 6 and 7 are views illustrating an axial bracket;
FIGs. 8 and 9 are views illustrating arrangement of axial brackets; and
FIG. 10 is a partial view of a tub.

### Mode for the Invention

Hereinafter, preferred embodiments of the present invention will be described in detail with reference to the accompanying drawings.

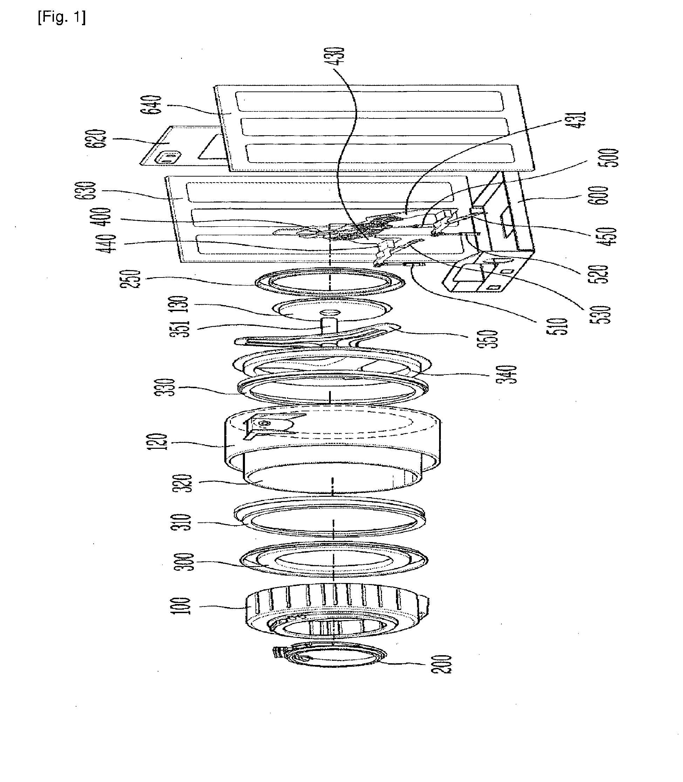

FIG. 1 is a partially exploded perspective view of a laundry machine in accordance with one embodiment of the present invention.

In the laundry machine, a tub is fixedly installed in a cabinet. The tub includes a tub front 100 forming a front portion of the tub, a tub rear 120 forming a rear portion of the tub.

The tub front 100 and the tub rear 120 may be assembled with each other by screws, and form an inner space in which a drum is contained. The tub rear 120 is provided with an opening formed at the rear portion thereof. The tub rear 120 is connected to a rear gasket 250, which is a flexible member, at the portion thereof provided with the opening. The rear gasket 250 is connected to a tub back 130 at the inner portion thereof in radial direction. A through hole, through which a rotary shaft 351 passes, is formed at the center of the tub back 130. The rear gasket 250 is flexibly deformed so as to prevent vibration of the tub back 130 from being transmitted to the tub rear 120.

The tub front 100, the tub rear 120, and the tub back 130 may be made of plastic.

The rear gasket 250 is respectively connected to the tub back 130 and the tub rear 120 so as to achieve sealing with the tub back 130 and the tub rear 120, thereby preventing wash water in the tub from leaking. The tub back 130 is vibrated together with vibration of the drum when the drum is rotated. Here, the tub back 130 is separated from the tub rear 120 by a sufficient interval to prevent interference with the tub rear 120. Since the rear gasket 250 may be flexibly deformed, the rear gasket 250 allows the tub back 130 to move relative to the tub rear 120 without interference with the tub rear 120. The rear gasket 250 may include a curved part or a folding part 252 so as to be extended to a sufficient length to permit the relative movement of the tub back 130.

The tub is provided with an inlet, through which laundry is put into and taken out of the laundry machine, formed through the front portion thereof. A front gasket 200 to prevent wash water from leaking through the inlet, to prevent foreign substances from being introduced into a gap between the tub and the drum, or to provide other functions is installed at the front portion of the tub provided with the inlet.

The drum includes a drum front 300, a drum center 320, and a drum back 340. Further, a ball balancer (not shown) may be installed at each of the front portion and the rear portion of the drum. The drum back 340 is connected to a spider 350, and the spider 350 is connected to the rotary shaft 351. The drum is rotated within the tub by rotary force transmitted through the rotary shaft 351.

The rotary shaft 351 passes through the tub back 130, and is connected to a motor 480. In this embodiment, the motor 480 is concentrically connected to the rotary shaft 351. That is, in this embodiment, the motor 480 is directly connected to the rotary shaft 351. More concretely, a rotor of the motor 480 and the rotary shaft 351 are directly connected to each other. Of course, the motor 480 and the rotary shaft 351 may not be directly connected, but may be connected by a belt. That is, the motor 480 and the rotary shaft 351 may be indirectly connected to each other.

A bearing housing 400 is connected to a rear surface 128 of the tub back 130. Further, the bearing housing 400 rotatably supports the rotary shaft 351 between the motor 480 and the tub back 130.

A stator of the motor 480 is fixedly installed at the bearing housing 400. Further, the rotor of the motor 480 is located so as to surround the stator. As described above, the rotor is directly connected to the rotary shaft 351. Here, the motor 480 is an outer rotor-type motor, and is directly connected to the rotary shaft 351.

The bearing housing 400 is supported by a cabinet base 600 through a suspension unit. The suspension unit includes a plurality of brackets connected to the bearing housing 400. Further, the suspension unit includes a plurality of suspensions connected to the plurality of brackets.

In this embodiment, the plurality of suspensions includes three vertical suspensions, and two inclined suspensions inclined forwardly and backwardly. The suspension unit is not connected to the cabinet base 600 in a completely fixed manner, but is connected to the cabinet base 600 such that the suspension unit may be elastically deformed to some extent so as to allow the drum to move back and forth and left and right. That is, the suspensions of the suspension unit are elastically supported such that rotation of the suspensions to some degree back and forth and left and right is permitted around support points where the suspensions of the suspension unit are connected to the cabinet base 600. In order to achieve the elastic support of the suspension unit, the vertical suspensions may be installed on the base 600 using rubber bushings as intermediates. Among the suspensions, the vertical suspensions elastically damp vibration of the drum, and the inclined suspensions reduce the vibration of the drum. That is, the vertical suspensions serve as springs and the inclined suspensions serve as damping means in a vibration system including the springs and the damping means.

The tub is fixedly installed in the cabinet, and the vibration of the drum is damped by the suspension unit. The front surface part and the rear surface part of the tub may be fixed to the cabinet. Further, the tub may be seated on and supported by the base of the cabinet, and further be fixed to the base.

The laundry machine in accordance with this embodiment is of a type in which a support structure of the tub and a support structure of the drum are separated from each other. Further, in the laundry machine in accordance with this embodiment, although the drum is vibrated, the tub is not vibrated. Here, only the amount of the vibration of the drum transmitted to the tub is varied by the rear gasket 250.

Further, the laundry machine in accordance with this embodiment has a remarkably weak vibration of the tub and does not require an interval between the tub and the cabinet, which was conventionally maintained to reduce the vibration of the tub, and thus the outer surface of the tub may be maximally close to the cabinet. Further, it allows the size of the tub to be extended although the size of the cabinet is not extended, thereby increasing the capacity of the laundry machine having the same external size.

An interval between the tub and a cabinet right 630 or a cabinet left 640 is substantially 5 mm at most. In a conventional laundry machine in which a tub is vibrated together with vibration of a drum, an interval between the tub and a cabinet to prevent interference therebetween was approximately 30mm. In consideration of the diameter of the tub, the laundry machine in accordance with this embodiment may have a diameter of the tub being greater than the tub of the conventional laundry machine by 50mm, and thus have a remarkably increased capacity while having the same external size.

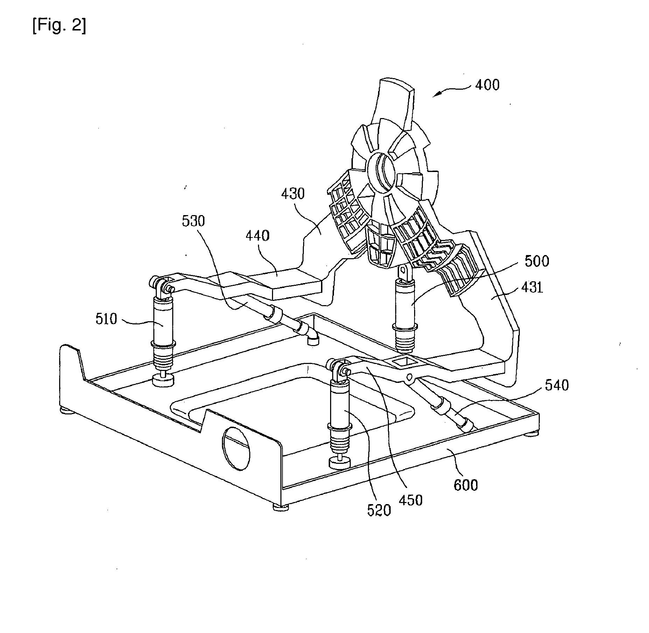

FIG. 2 illustrating mounting of the suspension unit on the base 600.

The suspension unit, as shown in FIG. 2, includes a first suspension 520, a second suspension 510, a third suspension 500, a first damper 540, and a second damper 530.

The first, second, and third suspensions 520, 510, 500 have a structure in which a spring is installed between a cylinder and a piston. The length of the suspensions 520, 510, 500 of the above structure having the cylinder and suspension is stably varied during damping. These suspensions 520, 510, and 500 may be made to have a damping effect. That is, these suspensions 520, 510, and 500 may be spring dampers.

The first damper 540 and the second damper 530 may be simple dampers. However, the first damper 540 and the second damper 530 may also be spring dampers.

The first suspension 520 is connected between a first axial bracket 450 and the base 600. Further, the second suspension 510 is connected between a second axial bracket 440 and the base 600.

The third suspension 500 is directly connected between the bearing housing 400 and the base 600.

The first, second, and third suspensions 520, 510, and 500 are vertically installed, and the first damper 540 and the second damper 530 are inclined forwardly and backwardly.

The third suspension 500 is installed at the center of the rear region of the base 600, and the first and second suspensions 520 and 510 are respectively installed at left and right sides in front of the third suspension 500. Further, the first damper 540 and the second damper 530 are respectively installed between the third suspension 500 and the first suspension 520 and between the third suspension 500 and the second suspension 510. This structure obtained by the first, second, and third suspension 520, 510, and 500 and the first and second dampers 540 and 530 is bilaterally symmetrical.

The bearing housing 400, the first suspension 520, and the second suspension 510 are separated from each other in the radial direction of the rotary shaft 351 as well as in the axial direction of the rotary shaft 351. Therefore, the suspension unit includes radial brackets extended in the radial direction and axial brackets extended in the axial direction.

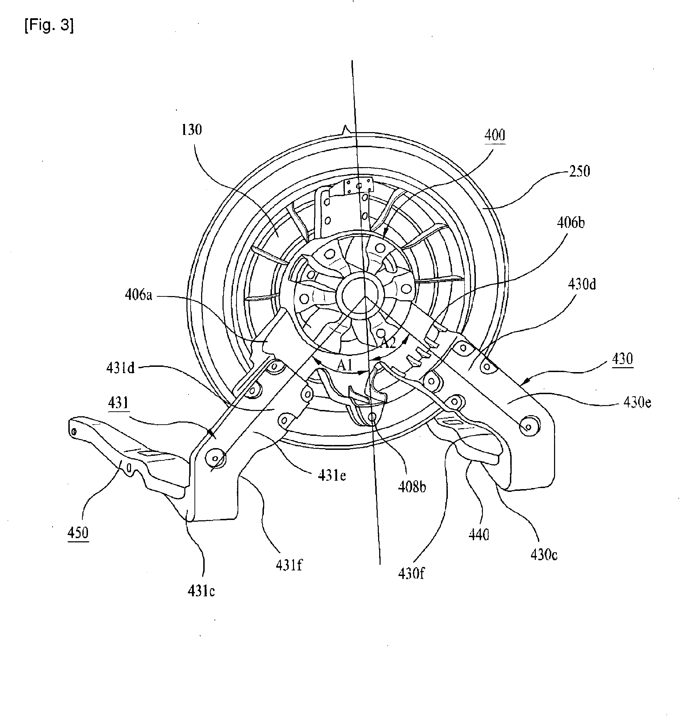

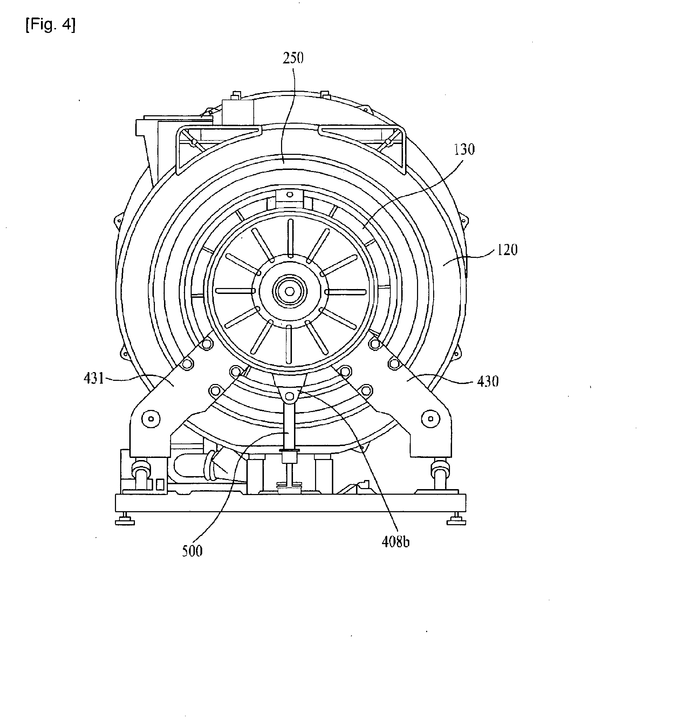

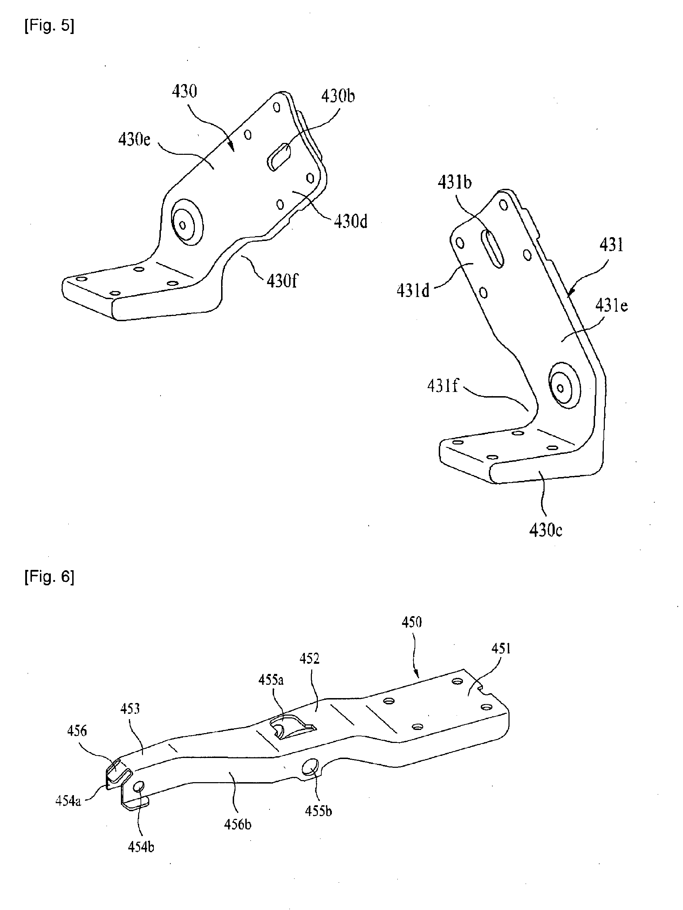

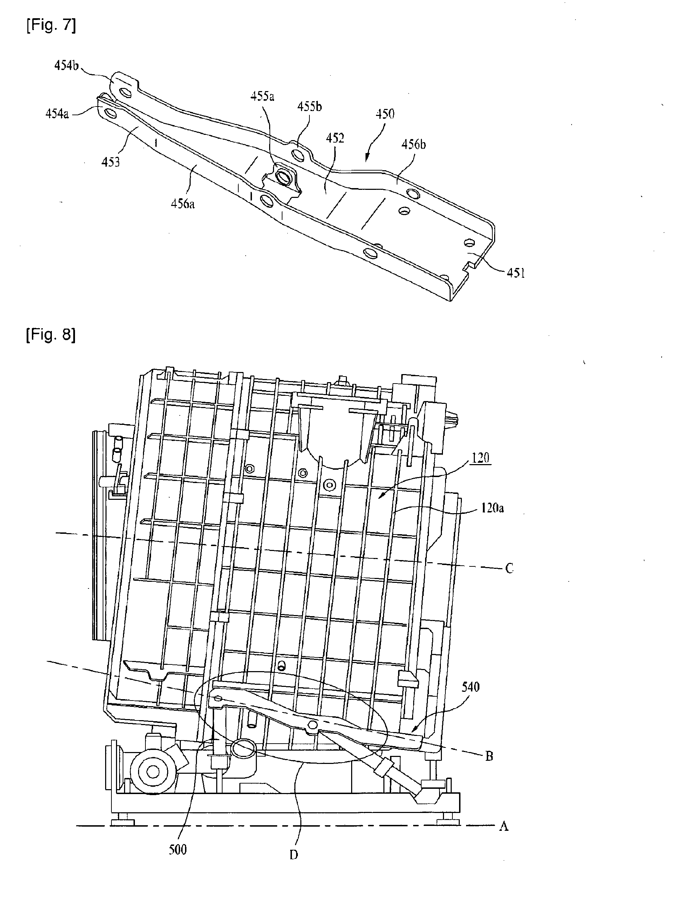

FIG. 5 illustrates radial brackets in detail, and FIGs. 6 and 7 illustrate an axial bracket in detail. First, with reference to FIGs. 3 to 5, the radial bracket will be described.

A first radial bracket 431 is connected to the left side of the bearing housing 400, and a second radial bracket 430 is connected to the right side of the bearing housing 400. The first radial bracket 431 and the second radial bracket 430 are symmetrical to each other with respect to the axial direction.

The first radial bracket 431 and the second radial bracket 430 serve not only as weights but also as brackets to respectively connect the first axial bracket 450 and the second axial bracket 440 to the bearing housing 400. Here, the weights serve to increase a mass in the vibration system.

The first radial bracket 431 and the second radial bracket 430 are configured such that they are extended in the radial direction of the rotary shaft 351, and then extended again in the forward direction. Coupling holes to be coupled with the bearing housing 400 are formed through the upper portion of each of these radial brackets 431 and 430. Here, four coupling holes are formed through the upper portion of each of the respective radial brackets 431 and 430.

Further, position determination recesses 431b and 430b to be inserted into the bearing housing 400 are respectively formed on the radial brackets 431 and 430.

Bracket connection parts 431c and 430c to be connected to the first axial bracket 450 and the second axial bracket 440 are respectively formed on the first radial bracket 431 and the second radial bracket 430.

The first radial bracket 431 and the second radial bracket 430 may be solid bodies obtained by casting using iron.

The first and second radial brackets 431 and 430 are provided with first and second coupling parts 431d and 430d, connected with the bearing housing, formed on the upper portions of the first and second radial brackets 431 and 430. These coupling parts 431d and 430d are fixedly connected to first and second extension parts 406a and 406b of the bearing housing 400 using coupling members. Here, the first and second coupling parts 431d and 430d are connected to first and second extension parts 406a and 406b such that an angle between the first and second coupling parts 431d and 430d is maintained to be the same as an angle between the first and second extension parts 406a and 406b. In order to achieve the above connection, the coupling holes are formed through the coupling parts 431d and 430d, and in order to secure higher coupling strength, four coupling holes are respectively formed through the coupling parts 431d and 430d.

The motor 480 is directly connected to the rotary shaft 351. Here, the first and second coupling parts 431d and 430d are connected to the bearing housing 400 from the outside in the radial direction of the motor 480. For this purpose, the first and second extension parts 406a and 406b are extended from a stator-coupled part of the bearing housing 400, with which the stator of the motor 480 is coupled, in the radial direction. Further, the first and second extension parts 406a and 406b are bent and extended in the opposite direction of the drum from the outside in the radial direction of the motor 480, and then extended again in the radial direction.

The radial brackets 431 and 430 is provided with middle parts 431e and 430e extended from the first and second coupling parts 431d and 430d. The middle parts 431e and 430e are located between the first and second coupling parts 431d and 430d and the bracket connection parts 431c and 430c.

The middle parts 431e and 430e are separated backwardly from the rear end of the tub by a sufficient interval with the tub to prevent interference with the tub due to vibration of the drum during operation of the laundry machine. A though hole having a greater diameter than the diameter of the tub back is formed through the center of the rear portion of the tub. Sealing between the tub and the tub back is achieved by the rear gasket 250.

The bracket connection parts 431c and 430c are extended forwardly from the middle parts 431e and 430e. The bracket connection parts 431c and 430c are located at the outside of the outer circumferential surface of the tub in the radial direction. Since the bracket connection parts 431c and 430c extended forwardly so as to be connected to the first and second axial brackets 450 and 440 may interfere with the outer surface of the sidewall of the tub as well as with the rear wall of the tub, the bracket connection parts 430c and 431c are made in consideration of the above interference.

The middle parts 431e and 430e are extended from the first and second coupling parts 431d and 430d such that an angle between the middle parts 431e and 430e is maintained to be the same as the angle between the first and second coupling parts 431d and 430d, and then are bent downwardly to be connected to the bracket connection parts 431c and 430c.

In the above laundry machine, vibration of the drum is configured such that a displacement of the vibration in the vertical direction (the direction perpendicular to the axial direction of a rotary shaft, when the rotary shaft is placed horizontally) is greater than a displacement of the vibration in the lateral direction. The reduction of the displacement of the vibration of the drum in the lateral direction is an important factor to increase the diameter of the drum. Therefore, it is an important factor to increase the capacity of the drum, and to increase the diameter of the door of the laundry machine.

It is necessary to design shapes and positions of the first and second axial brackets 450 and 440 so as to prevent interference with the vibrating tub. Since the moment applied to the first and second axial brackets 450 and 440 is gradually increased from the front portions thereof and the rear portion thereof, the first and second axial brackets 450 and 440 are designed such that the rear portions of the first and second axial brackets 450 and 440 have greater rigidity and strength than those of the front portions of the first and second axial brackets 450 and 440. Therefore, the rear portions of the first and second axial brackets 450 and 440 have a greater cross-sectional area than that of the front portions of the first and second axial brackets 450 and 440. Thereby, the rear portions of the first and second axial brackets 450 and 440 are disadvantageous in respect of interference with the tub, compared with the front portions of the first and second axial brackets 450 and 440. That is, it is necessary to separate the rear portions of the first and second axial brackets 450 and 440 from the outer surface of the sidewall of the tub by a sufficient interval to prevent interference with the outer surface of the sidewall of the tub. The tub has a structure having an approximately circular cross-sectional shape in which the width of the tub in the lateral direction is increased from the lower portion of the tub to the upper portion of the tub. Therefore, in order to separate the rear portions of the first and second axial brackets 450 and 440 from the tub, it is advantageous that the rear portions of the first and second axial brackets 450 and 440 are located at a lower position, if possible. Further, in consideration of the fact that the displacement of the vibration in the vertical direction is greater than the displacement of the vibration in the lateral direction, it is more advantageous that the rear portions of the first and second axial brackets 450 and 440 are located at the lower position. Therefore, it is preferable that, on the assumption that a line having an angle of 45 degrees with respect to a vertical line passing through the rotary shaft 351 of the drum when seen from the rear part of the laundry machine is drawn, the rear portions of the first and second axial brackets 450 and 440 are located below the line having the angle of 45 degrees. For reference, an angle A1 and an angle A2 are respectively 45 degrees.

Positions of the rear portions of the first and second axial brackets 450 and 440 are determined in consideration of the above factors.

The bracket connection parts 431c and 430c are connected to the first and second axial brackets 450 and 440 using coupling members. In order to achieve such connection, coupling holes are formed through the bracket connection parts 431a and 430c, and in order to secure higher coupling strength, four coupling holes are respectively formed through the bracket connection parts 431a and 430c.

The angle between the first and second extension parts 406a and 406b and the angle between the first and second coupling parts 431d and 430d is 90 degrees corresponding to the sum total of the angle A1 and the angle A2. The angle between the first and second extension parts 406a and 406b and the angle between the first and second coupling parts 431d and 430d, i.e., 90 degrees, allow the suspension unit to be structurally stable, compared with an obtuse angle and an acute angle.

Hereinafter, with reference to FIGs. 6 and 7, the first axial bracket 450 will be described. The second axial bracket 440 is symmetrical to the first axial bracket 450.

The first axial bracket 450 is formed in a U-shaped channel. That is, the first axial bracket 450 includes sidewalls 456a and 456b bent perpendicularly from the upper surface thereof to left and right, and thus is U-shaped. Further, the width of the first axial bracket 450 is decreased from the rear portion thereof to the front portion thereof.

Four coupling holes to be connected to the first radial bracket 431 are formed through the rear portion of the first axial bracket 450. The first radial bracket 450 is seated on the first axial bracket 431, and then is coupled with the first axial bracket 431 using bolts.

The first axial bracket 450 has a three-stepped structure. That is, the first axial bracket 450 includes a first stepped part 451 located at the rear portion thereof, a second stepped part 452 located in front of the first stepped part 451, and a third stepped part 453 located at the foremost portion thereof. The height of the first axial bracket 450 is increased from the first stepped part 451 to the third stepped part 453.

The first stepped part 451 is connected to the first radial bracket 431, the first damper 540 is hinged to the second stepped part 452, and the first suspension 520 is hinged to the third stepped part 453.

A portion of the upper surface of the second stepped part 452 is cut and bent perpendicularly, thereby producing a perpendicular bent part 455a to support the first damper 540. The first damper 540 is hinged to a gap between the perpendicular bent part 455a and the sidewall 455b of the first axial bracket 450. Of course, the first damper 540 may be hinged to a gap between both sidewalls 456a and 456b of the first axial bracket 450 without the perpendicular bent part 455a.

In more detail, as shown in FIG. 7, through holes, which are arranged with each other, are formed through the sidewalls 456a and 456b and the perpendicular bent part 455a. A corresponding connection part of the first damper 540 is disposed between the perpendicular bent part 455a and the left sidewall 456b or the right sidewall 456a. An extension part 455b extended downwardly to form the through hole of the left sidewall 456b is formed on the left sidewall 456b.

A coupling member, such as a hinge pin or a bolt, passes through the through holes of the left sidewall 456b or the right sidewall 456a and the perpendicular bent part 455a and a through hole of the connection part of the first damper 540, thereby connecting the first damper 540 to the first axial bracket 450. Here, the connection is a hinge connection allowing the first damper 540 to be rotated around a lateral axis. Although the coupling member interconnects one of the left sidewall 456b and the right sidewall 456a and the perpendicular bent part 455 in order to carry out the above connection, the coupling member may interconnect the right and left sidewalls 456b and 456a and the perpendicular bent part 455a while connecting the first damper 540 to the first axial bracket 450, thereby increasing strength or rigidity of the coupling portion. Particularly, rigidity of the first axial bracket 450 to rotating moment in the lateral direction may be more increased.

The first suspension 520 is hinged to a gap between both sidewalls 454a and 454b at the third stepped part 453.

A coupling direction of hinge bolts 541 to hinge the first damper 540 and the first suspension 520 to the first axial bracket 450 is the lateral direction. The hinge bolts 541 are coupled to the first damper 540 and the first suspension 520 in a direction from the outside toward the drum. The first damper 540 is hinged to the base 600, and in this case, a hinge bolt 542 is coupled to the first damper 540 in the same direction.

A downward bent part 456 is formed at the end of the third stepped part 453 for stopping the upper end of the first suspension 520 when the hinged connection broken. The bent part 456 prevents the upper end of the first suspension 520 from being separated forwardly from the first axial bracket 450, if the hinge connection of the first suspension 520 to the first axial bracket 450 is broken.

The first and second axial brackets 450 and 440 may be made of a channel member obtained by pressing a metal panel (for example, a steel panel).

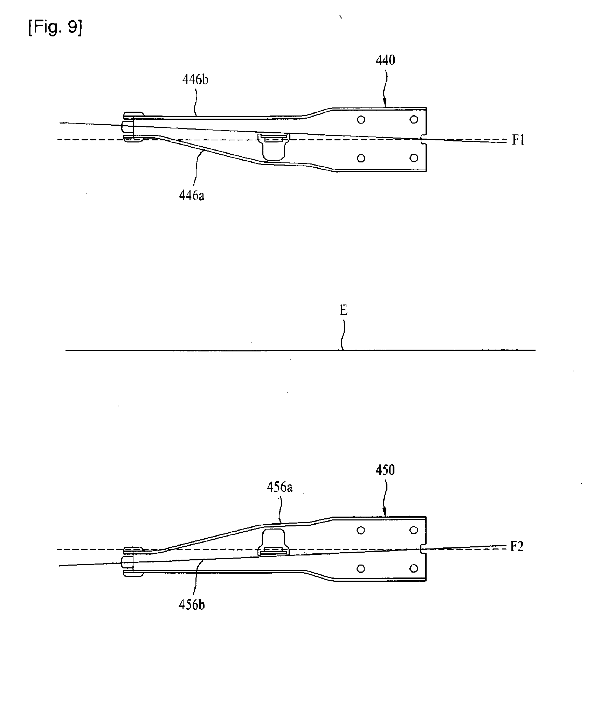

FIG. 8 is a side view illustrating the axial brackets of the suspension unit installed together with the tub, and FIG. 9 is a plan view illustrating arrangement of the axial brackets.

Since the suspensions 520 and 510 must have a sufficient length to satisfy a required damping ability, positions of the front ends of the first and second axial brackets 450 and 440 are determined in consideration of this fact. The positions of the rear portions of the first and second axial brackets 450 and 440, coupled with the radial brackets 431 and 430, in the vertical direction, i.e., the height of the rear portions of the first and second axial brackets 450 and 440, was described previously. Therefore, there is a difference of heights between the front ends and the rear ends of the first and second axial brackets 450 and 440, and thus the first and second axial brackets 450 and 440 are installed such that the front ends thereof are higher than the rear ends thereof. The first and second axial brackets 450 and 440 are installed such that they are inclined with respect to the horizontal bottom surface when seen from the side surface of the tub, as shown in FIG. 8. That is, the upper ends of the suspensions 520 and 510 are positioned higher than the bracket connection parts 431a and 430c, and for this reason, the first and second axial brackets 450 and 440 are inclined at a designated angle with respect to the horizontal plane, i.e., the ground A.

The drum is inclined such that the front portion thereof is higher than the rear portion thereof. An angle of inclination of the drum may be equal to or differ from the angle of inclination of the first and second axial brackets 450 and 440. That is, as shown in FIG. 8 illustrating comparison between the central line B of the first and second axial brackets 450 and 440 in the lengthwise direction and a central axis C of rotation of the drum, the first and second axial brackets 450 and 440 do not run parallel with the drum, but are inclined at an angle greater than that of the drum.

Since the front portions of the first and second axial brackets 450 and 440 are located higher than the rear portions of the first and second axial brackets 450 and 440 and the lateral width of the tub having an approximately cylindrical shape is gradually increased from the bottom surface thereof to the upper portion thereof, the interval between the first and second axial brackets 450 and 440 is increased from the rear portions thereof to the front portions thereof so as to prevent interference of the first and second axial brackets 450 and 440 with the tub. Further, among the sidewalls of the first and second axial brackets 450 and 440, the sidewalls close to the central axis of the drum are inclined such that the sidewalls become distant from the tub from the rear portions thereof to the front portions thereof.

In more detail, as shown in central lines F2 and F1 of the first and second axial brackets 450 and 440 in the lengthwise direction of FIG. 9, the front portions of the first and second axial brackets 450 and 440 from the central axis E of the tub and the drum are more widened in the lateral direction than the rear portions of the first and second axial brackets 450 and 400. That is, an interval between the front portions of the first and second axial brackets 450 and 440 may be greater than an interval between the rear portions of the first and second axial brackets 450 and 440. That is, a distance between the central lines F2 and F1 is gradually increased from the rear portions to the front portions of the first and second axial brackets 450 and 440. Due to this arrangement, the interval between the front portions of the first and second axial brackets 450 and 440 is properly increased. Therefore, although the front ends of the first and second axial brackets 450 and 440 are disposed higher than the rear ends of the first and second axial brackets 450 and 440, as shown in FIG. 8, the first and second axial brackets 450 and 440 secure a sufficient interval with the tub to prevent interference with the tub.

Separately from the above-described arrangement of the brackets 450 and 440, the inner sidewalls 456a and 446a of the brackets 450 and 440 may be gradually inclined outwardly from the rear portions thereof to the front portions thereof. The interval between the front portions of the first and second axial brackets 450 and 440 may be properly increased also by the inclined inner walls 456a and 446a, and thus a sufficient interval between the brackets 450 and 440 and the tub may be formed. If the outer sidewalls 456b and 446b run parallel with the central axis E, as shown in FIG. 9, the inclined inner sidewalls 456a and 446a become gradually close to the outer sidewalls 456b and 446d from the rear portions to the front portions of the brackets 450 and 440. On the other hand, in the same manner as the inner sidewalls 456a and 446a, the outer sidewalls 456b and 446b may be inclined outwardly.

The axial brackets 450 and 440 are designed such that the displacement of the vibration of the drum in the lateral direction is reduced to be smaller than displacements of the vibration of the drum in other directions. For this reason, the cross-sectional shape of the axial brackets 450 and 440 is designed such that a second moment of area of the axial brackets 450 and 440 about the lateral axis is smaller than a second moment of area of the axial brackets 450 and 440 about the vertical axis. That is, the axial brackets 450 and 440 is designed such that a smaller force is required to displace the front ends of the axial brackets 450 and 440 in the vertical direction than to displace the front ends of the axial brackets 450 and 440 in the lateral direction. The reduction of the displacement of the vibration of the drum in the lateral direction increases the diameter of the drum and thus increases the capacity of the drum, and further increases the diameter of the door of the laundry machine and thus improves visibility of the inside of the drum and provides convenience in putting or taking laundry into and out of the drum.

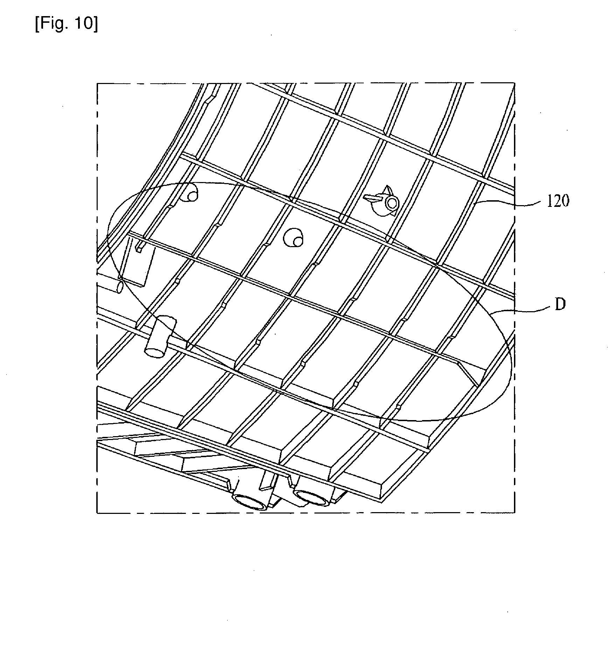

In order to allow the tub to have a required strength or rigidity, ribs 120a may be formed on the outer circumferential surface of the tub. Since these ribs 120a are protruded from the outer circumferential surface of the tub, the ribs 120a located at regions D adjacent to the first and second axial brackets 450 and 440 may interfere with the first and second axial brackets 450 and 440. Therefore, as shown in FIG. 10, the ribs 120a located at the regions D may have a relatively low height or may be removed so as not to interfere with the first and second axial brackets 450 and 440. That is, the outer circumferential surface of the tub may include regions in which ribs 120a at least having a lower height than that of other ribs 120a are formed so as to prevent interference with the first and second axial brackets 450 and 440.

In the present invention, the tub rear is installed such that movement of the tub rear relative to the cabinet is minimized, and a drum assembly is installed such that movement of the drum assembly is permitted according to vibration of the drum. A connection member is interposed between the tub rear and the drum assembly so as to connect the tub rear and the drum assembly and to absorb a vibration displacement of the drum assembly, thereby reducing the vibration of the tub rear relative to the drum assembly. The connection member may be selected from various structures, and the rear gasket may be one example of the structures.

Therefore, the rear gasket may be made of various materials in spite of the name thereof. That is, the rear gasket may be made of any material, which can reduce an amount of the vibration of the drum transmitted to the tub, in addition to materials, which are generally used to make gaskets. Further, the rear gasket may have various shapes, which can relatively minimize vibration transmission to the tub.

Moreover, the suspensions and the dampers are one example of suspensions to damp and support the drum assembly. The suspensions may be made of other shapes in addition to a cylinder shape in spite of the name thereof.

### Industrial Applicability

As is apparent from the above description, the present invention provides a laundry machine having a new structure to support a drum. In accordance with one embodiment of the present invention, the size of a tub fixed to a cabinet is enlarged such that the tub is located closer to the inner surface of the tub, and thereby the size of the drum is enlarged, thus allowing the laundry machine to have an increased capacity.

## Claims

1. A laundry machine comprising:
a tub (100, 120, 130) to hold water;
a drum (300, 320, 340) rotatably placed in the tub (100, 120, 130);
a drive assembly comprising a shaft (351) connected to the drum (300, 320, 340), a bearing housing (400) to rotatably support the shaft (351), and a motor to rotate the shaft (351); and
a suspension unit attached to the bearing housing (400) to reduce vibration of the drum (300, 320, 340),
**characterized by**
the suspension unit comprising a couple of radial brackets (430, 431) each connected to the bearing housing (400) placed with an angle to each other, and the angle is symmetrical with respect to a vertical line passing through the shaft (351) of the drum (300, 320, 340), and a couple of axial brackets (440, 450) each connected to each of the radial brackets (430, 431),which extend in an axial direction of the shaft (351) and of which one ends of respective inner sidewalls (446a, 456a) are further spaced away from each other than the other ends are,
wherein the couple of axial brackets (440, 450) are placed such that the front ends thereof are higher than the rear ends thereof with respect to the horizontal plane, **characterized in that** the axial bracket includes a first stepped part (451) located at the rear portion thereof, a second stepped part (452) located in front of the first stepped part (451) and the height of the second stepped part (452) being higher than that of the first stepped part (451), and a third stepped part (453) located at the foremost portion thereof and the height of the third stepped part (453) being higher than that of the second stepped part (452), and
wherein the first stepped part (451) is connected to the radial bracket (430, 431), the second stepped part (452) is hinged to an inclined damper (530, 540), and the third stepped part (453) is hinged to a vertical spring damper (510,520).

2. The laundry machine as claimed in claim 1, wherein the respective inner sidewalls (446a, 456a) have respective portions which are inclined towards respective outer sidewalls (446b, 456b).

3. The laundry machine as claimed in claim 1, wherein respective lateral widths of the axial brackets (440, 450) are smaller at a portion more distant from the shaft (351).

4. The laundry machine as claimed in claim 1, wherein the second stepped surface (452) has a cut-and-bent portion (455a) which is cut and bent downward and connected to the inclined damper (530, 540).

5. The laundry machine as claimed in claim 1, wherein each of the third stepped part (453) has a stopper (456) in front of an upper end of the vertical damper (510, 520) for stopping the upper end of the vertical damper (510, 520), when a hinged connection thereof is broken.

6. The laundry machine as claimed in claim 1, wherein the tub (100, 120, 130) comprises respective portions adjacent to the axial brackets (440, 450) where heights of ribs (120) are changed to be low or no ribs (120) are formed.

7. The laundry machine as claimed in claim 1, further comprising:
a flexible material (250) to prevent the water inside the tub (100, 120, 130) from leaking toward the drive assembly and allow the drive assembly to move relatively to the tub (100, 120, 130).

8. The laundry machine as claimed in claim 1, wherein the tub (100, 120, 130) is supported more rigidly than the drum (300, 320, 340) is supported by the suspension unit.

9. The laundry machine as claimed in any one of the preceding claims, wherein the radial brackets (430, 431) are configured such that they are extended in a radial direction of the rotary shaft (351) and then extended in the forward direction.

10. The laundry machine as claimed in any one of the preceding claims, wherein the radial brackets (430, 431) each include a coupling part (431 d, 430d), a middle part (431e, 430e) extended from the coupling part (431d, 430d) and a bracket connection part (430c, 431 c) extended forwardly from the middle part (431e, 430e).

11. The laundry machine as claimed in claim 10, wherein the middle parts (431e, 430e) of the radial brackets (430, 431) are extended from the coupling parts (431d, 430d) such that an angle between the middle parts (431e, 430e) is maintained to be the same as the angle between the coupling parts (431d, 430d) and are then bent downwardly to be connected to the bracket connection parts (431 c, 430c).

12. The laundry machine as claimed in claim 10, wherein an interval between the radial brackets (430, 431) is increased from rear portions thereof to the front portions.

## Patentansprüche

1. Waschmaschine, die umfasst:
einen Bottich (100, 120, 130), um Wasser zu halten;
eine Trommel (300, 320, 340), die in dem Bottich (100, 120, 130) drehbar angeordnet ist;
eine Antriebsanordnung, die eine mit der Trommel (300, 320, 340) verbundene Welle (351), ein Lagergehäuse (400), um die Welle (351) drehbar zu tragen, und einen Motor, um die Welle (351) zu drehen, enthält; und
eine Aufhängungseinheit, die an dem Lagergehäuse (400) befestigt ist, um Schwingungen der Trommel (300, 320, 340) zu verringern,
**dadurch gekennzeichnet, dass**
die Aufhängungseinheit ein Paar radialer Arme (430, 431), wovon jeder mit dem Lagergehäuse (400) verbunden ist und die unter einem gegenseitigen Winkel angeordnet sind, wobei der Winkel in Bezug auf eine durch die Welle (351) der Trommel (300, 320, 340) verlaufende vertikale Linie symmetrisch ist, und ein Paar axialer Arme (440, 450), wovon jeder mit einem der radialen Arme (430, 431) verbunden ist, sich in einer axialen Richtung der Welle (351) erstreckt und wovon Enden jeweiliger innerer Seitenwände (446a, 456a) weiter voneinander beabstandet sind als die anderen Enden, umfasst,
wobei das Paar axialer Arme (440, 450) in der Weise angeordnet ist, dass die vorderen Enden hiervon in Bezug auf die horizontale Ebene höher als die hinteren Enden hiervon sind, **dadurch gekennzeichnet, dass** der axiale Arm einen ersten gestuften Teil (451), der sich an seinem hinteren Abschnitt befindet, einen zweiten gestuften Teil (452), der sich vor dem ersten gestuften Teil (451) befindet und dessen Höhe höher ist als jene des ersten gestuften Teils (451), und einen dritten gestuften Teil (453), der sich am vordersten Abschnitt hiervon befindet und dessen Höhe höher ist als jene des zweiten gestuften Teils (452), umfasst, und
wobei der erste gestufte Teil (451) mit dem radialen Arm (430, 431) verbunden ist, der zweite gestufte Teil (452) an einem geneigten Dämpfer (530, 540) angelenkt ist und der dritte gestufte Teil (453) an einem vertikalen Federdämpfer (510, 520) angelenkt ist.

2. Waschmaschine nach Anspruch 1, wobei die jeweiligen inneren Seitenwände (446a, 456a) jeweilige Abschnitte besitzen, die zu entsprechenden äußeren Seitenwänden (446b, 456b) geneigt sind.

3. Waschmaschine nach Anspruch 1, wobei jeweilige seitliche Breiten der axialen Arme (440, 450) an einem Abschnitt, der von der Welle (351) weiter entfernt ist, kleiner sind.

4. Waschmaschine nach Anspruch 1, wobei die zweite gestufte Oberfläche (452) einen eingeschnittenen und gebogenen Abschnitt (455a) besitzt, der eingeschnitten und nach unten gebogen und mit dem geneigten Dämpfer (530, 540) verbunden ist.

5. Waschmaschine nach Anspruch 1, wobei jeder der dritten gestuften Teile (453) vor einem oberen Ende des vertikalen Dämpfers (510, 520) einen Anschlag (456) besitzt, um das obere Ende des vertikalen Dämpfers (510, 520) anzuhalten, wenn eine Anlenkverbindung hiervon gebrochen ist.

6. Waschmaschine nach Anspruch 1, wobei der Bottich (100, 120, 130) jeweilige Abschnitte in der Nähe der axialen Arme (440, 450) aufweist, wo Höhen von Rippen (120) zu niedrigen Werten geändert sind oder keine Rippen (120) ausgebildet sind.

7. Waschmaschine nach Anspruch 1, die ferner umfasst:
ein flexibles Material (250), um zu verhindern, dass Wasser in dem Bottich (100, 120, 130) zu der Antriebsanordnung entweicht, und um der Antriebsanordnung zu erlauben, sich relativ zu dem Bottich (100, 120, 130) zu bewegen.

8. Waschmaschine nach Anspruch 1, wobei der Bottich (100, 120, 130) starrer getragen wird als die Trommel (300, 320, 340) durch die Aufhängungseinheit getragen wird.

9. Waschmaschine nach einem der vorhergehenden Ansprüche, wobei die radialen Arme (430, 431) so konfiguriert sind, dass sie sich in einer radialen Richtung der Drehwelle (351) erstrecken und sich dann in der Vorwärtsrichtung erstrecken.

10. Waschmaschine nach einem der vorhergehenden Ansprüche, wobei die radialen Arme (430, 431) jeweils einen Kopplungsteil (431d, 430d), einen Mittelteil (431e, 430e), der sich von dem Kopplungsteil (431d, 430d) erstreckt, und einen Armverbindungsteil (430c, 431c), der sich von dem Mittelteil (431e, 430e) vorwärts erstreckt, aufweisen.

11. Waschmaschine nach Anspruch 10, wobei sich die Mittelteile (431e, 430e) der radialen Arme (430, 431) von den Kopplungsteilen (431d, 430d) in der Weise erstrecken, dass ein Winkel zwischen den Mittelteilen (431e, 430e) gleich dem Winkel zwischen den Kopplungsteilen (431d, 430d) gehalten wird, und dann nach unten gebogen sind, um mit den Armverbindungsteilen (431c, 430c) verbunden zu sein.

12. Waschmaschine nach Anspruch 10, wobei ein Intervall zwischen den radialen Armen (430, 431) von hinteren Abschnitten hiervon zu den vorderen Abschnitten zunimmt.

## Revendications

1. Machine à laver, comprenant :
une cuve (100, 120, 130) pour contenir de l'eau ;
un tambour (300, 320, 340) placé avec possibilité de rotation dans la cuve (100, 120, 130) ;
un ensemble d'entraînement comprenant un arbre (351) connecté au tambour (300, 320, 340), un boîtier-palier (400) pour supporter l'arbre (351) en rotation, et un moteur pour mettre l'arbre (351) en rotation ; et une unité de suspension attachée au boîtier-palier (400) pour réduire les vibrations du tambour (300, 320, 340),
**caractérisée en ce que**
l'unité de suspension comprend un couple de platines radiales (430, 431), connectées chacune au boîtier-palier (400) et placées sous un angle l'une par rapport à l'autre, et l'angle est symétrique par rapport à une ligne verticale passant à travers l'arbre (351) du tambour (300, 320, 340), et un couple de platines axiales (440, 450), connectées chacune à chacune des platines radiales (430, 431), qui s'étendent dans une direction axiale de l'arbre (351), et dans lesquelles des premières extrémités des parois latérales intérieures respectives (446a, 456a) sont écartées plus loin l'une de l'autre que le sont les autres extrémités,
dans laquelle le couple de platines axiales (440, 450) sont placées de telle façon que leurs extrémités frontales sont plus hautes que leurs extrémités arrière par rapport au plan horizontal,
**caractérisée en ce que**
la platine axiale inclut une première partie en gradin (451) située au niveau de sa portion postérieure, une seconde partie en gradin (452) située en face de la première partie en gradin (451), et la hauteur de la seconde partie en gradin (452) est plus haute que celle de la première partie en gradin (451), et une troisième partie en gradin (453) située au niveau de la portion la plus antérieure de celle-ci, et la hauteur de la troisième partie en gradin (453) est plus haute que celle de la seconde partie en gradin (452), et
dans laquelle la première partie en gradin (451) est connectée à la platine radiale (430, 431), la seconde partie en gradin (452) est articulée sur un amortisseur incliné (530, 540), et la troisième partie en gradin (453) est articulée sur un amortisseur à ressort vertical (510,520).

2. Machine à laver selon la revendication 1, dans laquelle les parois latérales intérieures respectives (446a, 456a) ont des portions respectives qui sont inclinées vers des parois latérales extérieures respectives (446b, 456b).

3. Machine à laver selon la revendication 1, dans laquelle les largeurs latérales respectives des platines axiales (440, 450) sont plus petites au niveau d'une portion à plus grande distance de l'arbre (351).

4. Machine à laver selon la revendication 1, dans laquelle la seconde surface en gradin (452) possède une portion coupée/cintrée (455a) qui est coupée et cintrée vers le bas et connectée à l'amortisseur incliné (530, 540).

5. Machine à laver selon la revendication 1, dans laquelle la troisième partie en gradin (453) comporte un arrêt (456) en face d'une extrémité supérieure de l'amortisseur vertical (530, 520) pour arrêter l'extrémité supérieure de l'amortisseur vertical (510, 520) quand une connexion articulée de celui-ci est brisée.

6. Machine à laver selon la revendication 1, dans laquelle la cuve (100, 120, 130) comprend des portions respectives adjacentes aux platines axiales (440, 450), dans lesquelles les hauteurs de nervures (120) sont changées pour être faibles ou bien dans lesquelles aucunes nervures (120) ne sont formées.

7. Machine à laver selon la revendication 1, comprenant en outre :
un matériau flexible (250) pour empêcher à l'eau à l'intérieur de la cuve (100, 120, 130) de fuir vers l'ensemble d'entraînement et permettre à l'ensemble d'entraînement de se déplacer par rapport à la cuve (100, 120, 130).

8. Machine à laver selon la revendication 1, dans laquelle la cuve (100, 120, 130) est supportée plus rigidement que le tambour (30, 320, 340) est supporté par l'unité de suspension.

9. Machine à laver selon l'une quelconque des revendications précédentes, dans laquelle les platines radiales (430, 431) sont configurées de telle façon qu'elles s'étendent dans une direction radiale de l'arbre rotatif (351) et s'étendent ensuite dans la direction vers l'avant.

10. Machine à laver selon l'une quelconque des revendications précédentes, dans laquelle les platines radiales (430, 431) incluent chacune une partie de couplage (431d, 430d), une partie médiane (431e, 430e) qui s'étend depuis la partie de couplage (431d, 430d), et une partie de connexion de platine (430c, 431c) qui s'étend vers l'avant depuis la partie médiane (431e, 430e).

11. Machine à laver selon la revendication 10, dans laquelle les parties médianes (431e, 430e) des platines radiales (430, 431) s'étendent depuis les parties de couplage (431d, 430d) de telle façon qu'un angle entre les parties médianes (431e, 430e) est maintenu pour être égal à l'angle entre les parties de couplage (431d, 430d), et sont ensuite cintrées vers le bas pour être connectées aux parties de connexion de platines (431c, 430c).

12. Machine à laver selon la revendication 10, dans laquelle un intervalle entre les platines radiales (430, 431) augmente depuis leurs portions postérieures vers leurs portions antérieures.
